## Europäisches Patentamt
## European Patent Office
## Office européen des brevets

(11) Veröffentlichungsnummer: **0 219 661 B1**

## EUROPÄISCHE PATENTSCHRIFT

(45) Veröffentlichungstag der Patentschrift: **27.03.91**

(51) Int. Cl.⁵: **F16L 33/00, B25B 27/10**

(21) Anmeldenummer: **86112061.6**

(22) Anmeldetag: **01.09.86**

(54) **Kunststoffrohrverbindung.**

(30) Priorität: **13.09.85 CH 3972/85**

(43) Veröffentlichungstag der Anmeldung:
**29.04.87 Patentblatt 87/18**

(45) Bekanntmachung des Hinweises auf die
Patenterteilung:
**27.03.91 Patentblatt 91/13**

(84) Benannte Vertragsstaaten:
**AT BE CH DE FR GB IT LI LU NL SE**

(56) Entgegenhaltungen:
DE-A- 2 062 303          DE-A- 3 129 204
FR-A- 364 319            FR-A- 1 146 949
FR-A- 2 245 896          GB-A- 740 717
US-A- 2 269 629          US-A- 2 444 622

(73) Patentinhaber: **J. + R. Gunzenhauser AG**
**Hauptstrasse 130**
**CH-4450 Sissach(CH)**

(72) Erfinder: **Bürli, Kurt**
**Rickenbacherstrasse 88**
**CH-4463 Buus(CH)**

(74) Vertreter: **Eschmann, Heinz et al**
**A. Braun, Braun, Héritier, Eschmann AG Pa-**
**tentanwälte Holbeinstrasse 36-38**
**CH-4051 Basel(CH)**

**Beschreibung**

Es ist eine jedem Fachmann der Trinkwasser-Installationstechnik bekannte Tatsache, dass die früher praktisch exklusiv verwendeten Metallrohre in den letzten Jahren auch für Trinkwasser-Installationssysteme immer mehr durch Kunststoffrohre ersetzt wurden. Dies hat seinen guten Grund: Einerseits ist die aus Kunststoff, insbesondere aus vernetztem Polyethylen, hergestellte Wasserleitung keinerlei Korrosion und demgemäss auch nicht dem gefürchteten Lochfrass ausgesetzt, während andererseits - um nur die hervorragendsten Vorteile zu nennen - kaum Fliessgeräusche entstehen und die Verlegung der Leitung dank dem Wegfall aufwendiger Arbeitsvorgänge stark vereinfacht werden konnte.

Die Erfindung bezieht sich auf eine, die Verlegung einer derartigen Leitung erleichternde Rohrverbindung mit den Oberbegriffsmerkmalen des Anspruchs 1. Sie betrifft ferner eine Vorrichtung zum Hestellen einer Rohrverbindung.

Bei einer gattungsgemässen Rohrverbindung (GB-A-740 717) wird der aufgeweitete Endabschnitt der Kunststoffrohrleitung unmittelbar durch die Ueberwurfmutter an die Anpressfläche des Anschlussstückes angepresst. Es ergibt sich damit eine Rohrverbindung, die keine Verkleinerung des Durchflussquerschnittes mit sich bringt und bei der die Montage keine Anwärmung des Rohrendes bedingt. Es können dabei aber, insbesondere bei einer intensiven Wechselbelastung durch einen häufigen Uebergang zwischen einer Kalt- und einer Warmwasserströmung, zu einem Lecken führende Undichtheiten auftreten. Dadurch kann die Funktionstüchtigkeit herabgesetzt werden und es können bspw. Wartungsarbeiten erforderlich werden.

Bei der bekannten Rohrverbindung ist weiterhin die Metallhülse, mit der die Ueberwurfmutter zum Ausüben eines Anpressdruckes zusammenwirkt, mit dem hierfür ein Aussengewinde aufweisenden Rohrende verschraubt. Die Herstellung einer derartigen Schraubverbindung ist, da das Rohrende mit einem Aussengewinde zu versehen ist, relativ aufwendig.

Der Erfindung liegt die Aufgabe zugrunde, eine gattungsgemässe Rohrverbindung so weiterzubilden, dass in einfacher Weise auch beim Auftreten einer intensiven Wechselbelastung Undichtheiten sicher vermieden sind. Der Erfindung liegt weiter die Aufgabe zugrunde, eine Vorrichtung für eine einfache und sichere Herstellung der erfindungsgemässen Rohrverbindung zu schaffen. Die die Rohrverbindung betreffende Aufgabe ist erfindungsgemäss durch eine Rohrverbindung mit den Merkmalen des Anspruchs 1 gelöst. Die sich auf die Vorrichtung beziehende Aufgabe ist erfindungsgemäss durch eine Vorrichtung nach den Merkmalen des Anspruchs 5 gelöst. Weitere vorteilhafte Ausgestaltungen ergeben sich jeweils durch die Merkmale der abhängigen Patentansprüche.

Nachstehend wird anhand der beiliegenden Zeichnungen ein Ausführungsbeispiel des Erfindungsgegenstandes erläutert. Es zeigen:

Fig. 1 eine Schnittdarstellung vom Endabschnitt eines Kunststoffrohres nach Montage der Mitnehmerhülse,

Fig.2 die dazugehörige fertige Rohrverbindung,

Fig. 3 einen Schnitt längs der Linie I-I in Fig. 2

Fig. 4 eine teilweise im Schnitt dargestellte Seitenansicht der zur Montage der Rohrverbindung dienenden Vorrichtung (Montagephase 1),

Fig. 5 eine Seitenansicht der gleichen Vorrichtung in einer anderen Betriebslage (Montagephase 2),

Fig. 6 eine weitere, teilweise aufgeschnittene Ansicht dieser Vorrichtung (Montagephase 3) und

Fig. 7 ein konstruktives Detail.

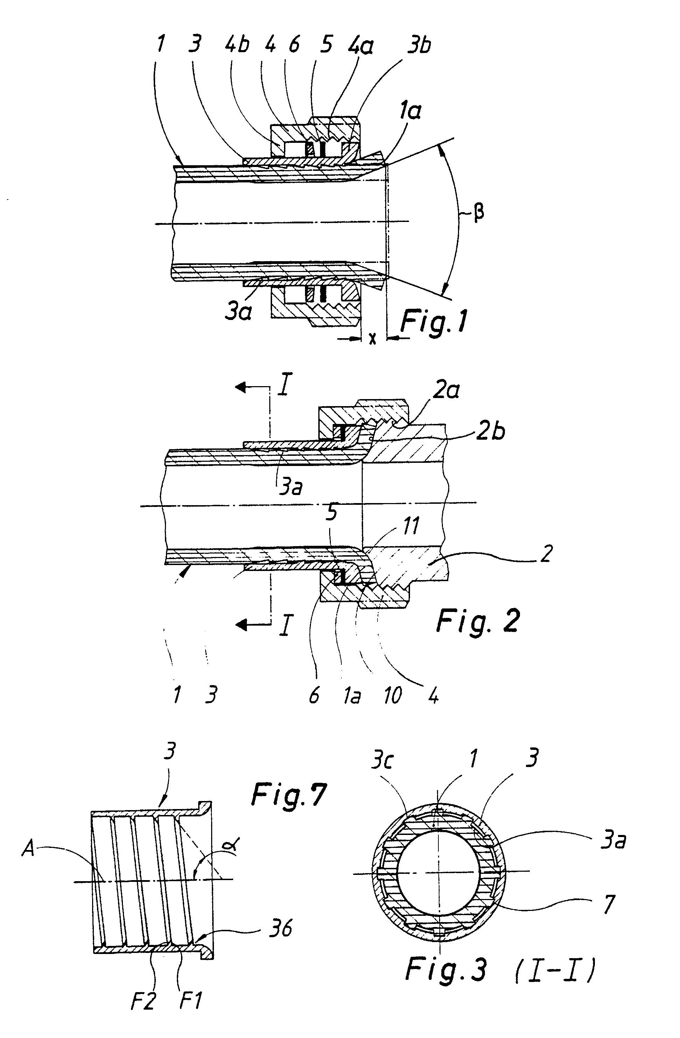

Gemäss Fig. 1 befindet sich am Umfang eines Kunststoffrohres 1, das vorzugsweise aus vernetztem Polyethylen besteht, eine ungeschlitzte Mitnehmerhülse 3, welche in noch zu beschreibender Weise axial auf das Kunststoffrohr 1 aufgeschoben wurde. Die vorzugsweise aus Messing gefertigte Mitnehmerhülse 3 weist einen ungeschlitzten zylindrischen Grundkörper auf, welcher eine Anzahl nach innen gerichteter, widerhakenartiger Zähne 3a sowie - an seiner dem Rohrende zugewandten Stirnseite - eine radial nach aussen ragende Anformung besitzt, die aufgrund ihrer Funktion als Mitnehmer 3b bezeichnet wird. Der Mitnehmer 3b kann entweder als durchgehender Ringflansch oder in Form einzelner, voneinander beabstandeter Mitnehmernocken ausgebildet sein.

Am Umfang der in Fig. 1 dargestellten Mitnehmerhülse 3 befindet sich eine Ueberwurfmutter 4, welche so bemessen ist, dass deren Innengewinde 4a über den Mitnehmer 3b geschoben werden kann, während die radial nach innen ragende Ringschulter 4b gleitend am Aussenumfang der Mitnehmerhülse 3 verschiebbar ist.

Von Bedeutung ist ferner, dass die Mitnehmerhülse 3 bei deren Montage so weit auf das Kunststoffrohr 1 aufgeschoben wurde, bis sich deren vordere Stirnfläche bzw. Stirnkante im Abstand x von der Stirnfläche des Rohres 11 befindet.

Das an der fertigen Rohrverbindung nach Fig. 2 ersichtliche Anschlussstück 2, das beispielsweise Teil einer Armatur sein kann, weist ein dem Innengewinde 4a der Ueberwurfmutter 4 entsprechendes Aussengewinde 2a auf und ist ferner mit einer gewölbten Stirnfläche 2b versehen. Die Innenkante 11 des Anschlussstücks 2 wird vorzugsweise abgerundet. Statt der dargestellten Wölbung kann die Stirnfläche 2b auch eine andere zweckentsprechende Form haben und z.B. konisch verlaufen.

Bei der Montage der Rohrverbindung wird zunächst die Mitnehmerhülse 3 mit der Ueberwurfmutter 4, vorzugsweise unter Zwischenlage eines friktionshindernden Gleitringes 5, auf das Kunststoffrohr 1 aufgeschoben, bis der Abstand x erreicht ist. Anschliessend wird die Ueberwurfmutter 4 auf das Anschlussstück 2 aufgeschraubt, wobei deren Ringschulter 4b die Mitnehmerhülse 3 über deren Mitnehmer 3b gegen das Anschlussstück 2 zieht. Dabei wird das vordere Ende des Kunststoffrohres 1 bei dem Aufschieben der Mitnehmerhülse 3 leicht aufgebördelt (Bördelwinkel β), so dass das Rohrende beim Anziehen der Ueberwurfmutter 4 im Zusammenwirken mit der gewölbten Fläche 10 radial umgelenkt wird und der umgelenkte, nun radial auswärts gerichtete Rohrabschnitt zwischen Mitnehmerhülse 3 und Anschlussstück 2 eingeklemmt wird. Dank der auf diese Weise vergrösserten Dichtfläche ergibt sich ein guter Abdichteffekt. Der Gleitring 5, welcher beispielsweise aus Teflon oder einem anderen reibungsarmen Material besteht, verhindert das Mitdrehen des Rohres 1 beim Anziehen der Ueberwurfmutter 4. Zusätzlich werden eventuell auftretende axiale Auszugskräfte aufgenommen.

Um ein Verdrehen der Mitnehmerhülse 3 auf dem Kunststoffrohr 1 zu verhindern, ist dieselbe, wie die Schnittdarstellung nach Fig. 3 zeigt, mit keilförmigen Rillen 7 versehen.

Bei intensiver Wechselbelastung durch den ständigen Uebergang von Kalt- zum Warmwasser und umgekehrt könnten sich im Laufe der Zeit Undichtheiten ergeben, so dass die Rohrverbindung zu tropfen anfängt. Diese Undichtheiten sind nun nicht, wie man vermuten sollte, auf eine Lockerung der Ueberwurfmutter 4 zurückzuführen, sondern das Kunststoffmaterial des Rohrendes kommt aufgrund des relativ hohen, insbesondere durch die Temperaturerhöhung bedingten Einspanndruckes zum Fliessen. Um diesen zur Undichtheit führenden Fliessvorgang auszugleichen, wird, wie in Fig. 1 und 2 dargestellt, zwischen der Ringschulter 4b der Ueberwurfmutter 4 und dem Mitnehmer 3b der Mitnehmerhülse 3 zusätzlich ein elastisches Nachstellglied, beispielsweise eine Federscheibe 6, eingelegt. Der eventuell mit dem Fliessen des Rohrmaterials verbundene Schwund wird somit selbsttätig durch die elastische Nachstellkraft der Federscheibe 6 kompensiert.

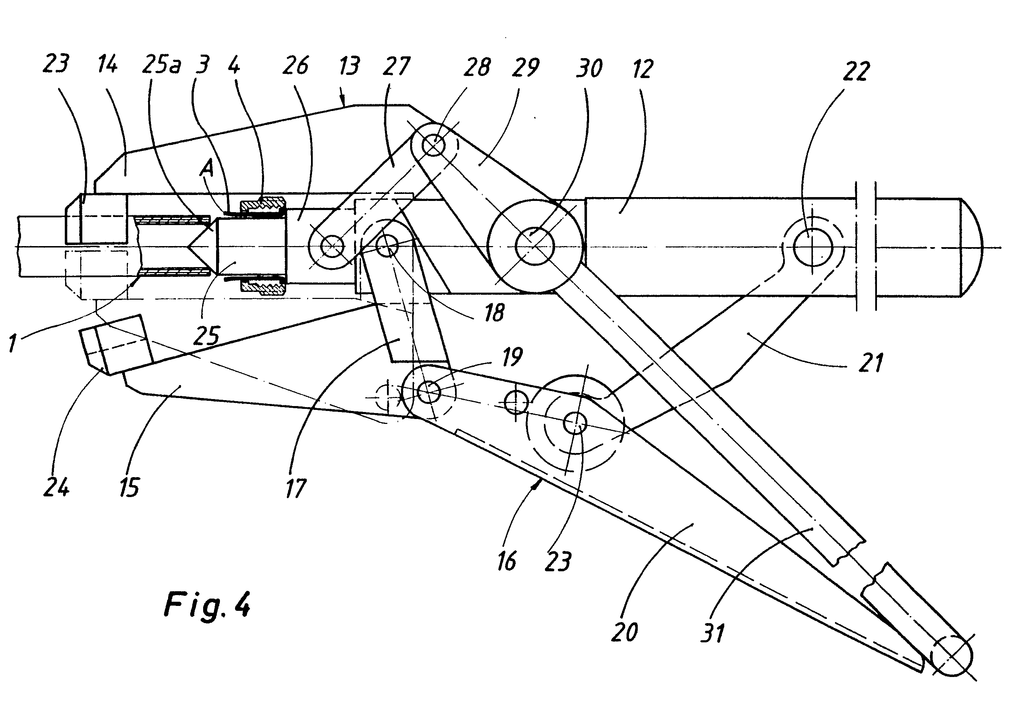

Die Montage der von Fig. 1 bis 3 erläuterten Rohrverbindung erfolgt zweckmässigerweise mittels einer eigens hierfür entwickelten Vorrichtung, welche nun aufgrund der Fig. 4 bis 6 beschrieben werden soll. Dabei soll zunächst auf den konstruktiven Aufbau und anschliessend auf die Funktion der Vorrichtung eingegangen werden.

An einem Grundkörper, der hinfort im Hinblick auf seine Funktion als Halter 12 bezeichnet wird, sind drei zu einem gemeinsamen Ziel - dem einwandfreien Aufbringender Mitnehmerhülse auf das Kunststoffrohrzusammenwirkende Funktionsgruppen angeordnet.

Erstens ist am vorderen Halterabschnitt eine in ihrer Gesamtheit mit 13 bezeichnete Spannzange vorgesehen, welche einen ortsfesten Zangenschenkel 14, einen beweglich gelagerten Zangenschenkel 15 und einen zu deren Betätigung dienenden Kniehebelverschluss 16 aufweist. Der Zangenschenkel 14 ist vorzugsweise einteilig mit dem Halter 12 ausgeführt und bildet somit die vordere, seitlich etwas auskragende Verlängerung desselben. Der Zangenschenkel 15 weist einen als Lenker 17 dienenden Fortsatz auf, welcher einerseits über ein Gelenk 18 am Halter 12, andererseits über ein Gelenk 19 an einem Spannhebel 20 angelenkt ist. Der Spannhebel 20 ist seinerseits mittels eines weiteren Lenkers 21 und zweier Gelenke 22 bzw. 23 mit dem Halter 12 verbunden. Der Zangenschenkel 15 bildet daher mit dem angeformten Lenker 17, dem Spannhebel 20 und dem Lenker 21 ein Kniehebelgestänge, durch welches sich der bewegliche Zangenschenkel 15 bei Betätigung des Spannhebels 20 in der strichpunktiert angedeuteten Schliesslage (Fig. 4) blockieren lässt.

Die beiden Zangenschenkel 14 und 15 weisen an ihrem freien Ende je eine Spannbacke 23 und 24 auf. Die Aufnahmeöffnung der in Schliesslage befindlichen Spannbacken 23, 24 ist so gewählt, dass dieselben das Kunststoffrohr 1 sicher gegen jegliche ungewollte Axialverschiebung halten.

Die zweite Funktionsgruppe, welche das eigentliche Aufschieben der Mitnehmerhülse 3 auf das Kunststoffrohr 1 zu bewerkstelligen hat, umfasst einen im Halter 12 gelagerten, als Zentrierdorn dienenden Anschlag 25, an dessen Umfang ein Pressring 26 gleitend gelagert ist. Der Pressring 26 ist über einen Pleuel 27 und einen mittels Gelenk 28 mit diesem verbundenen Arm 29, der über ein ortsfestes Gelenk 30 hinaus durch einen Betätigungshebel 31 verlängert ist, verschiebbar.

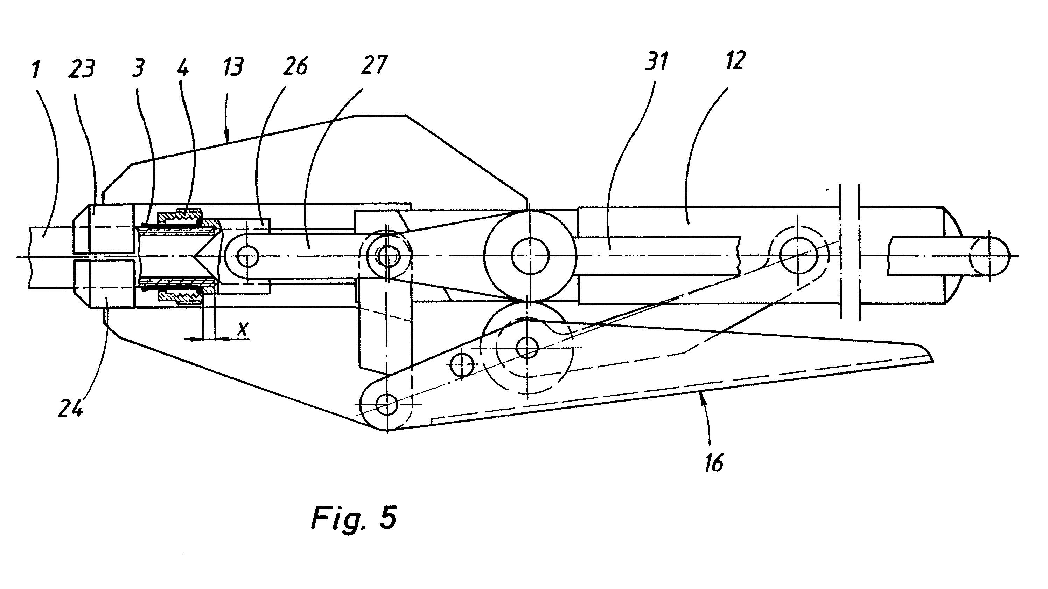

Pleuel 27 und Arm 29 bilden eine Schubkurbel, welche so bemessen ist, dass dieselbe in ihrer Strecklage die Mitnehmerhülse 3 mit einem Uebermass x (Fig. 1 und 5) auf das Kunststoffrohr 1 aufschiebt.

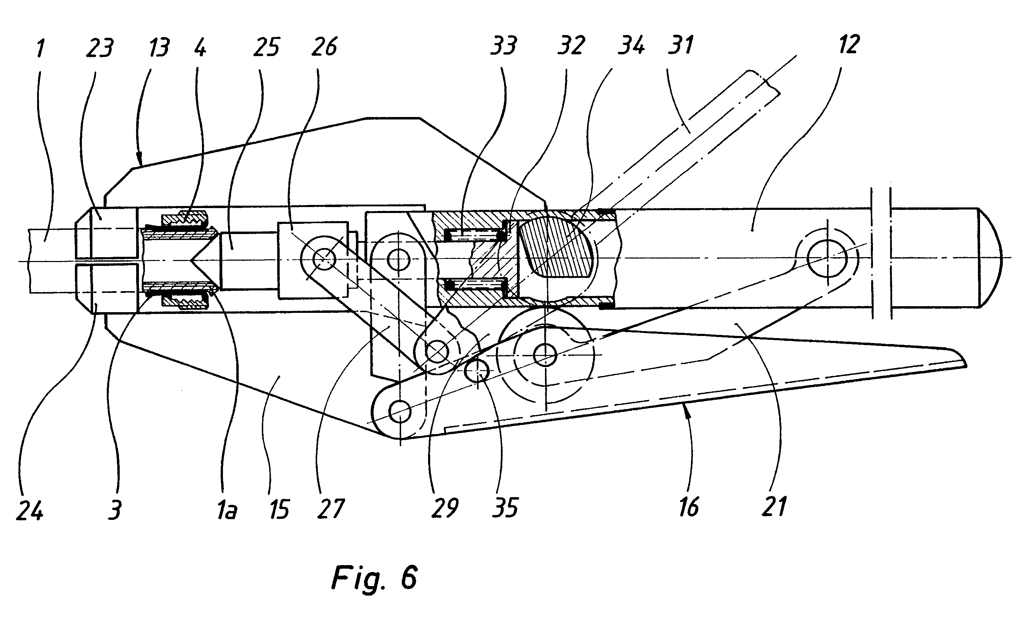

Die dritte, aus Fig. 6 ersichtliche Funktionsgruppe soll nach dem Aufschieben der Presshülse 3 eine leichte Voraufweitung (Vorbördelung) des dem Anschlag 25 zugewandten Rohrendes 1a bewirken. Zu diesem Zwecke ist der verschiebbar im Halter 12 gelagerte Anschlag 25 an seinem der konischen Spitze 25a abgewandten Ende mit einer Anschlagschulter 32 versehen, die einerseits als Federteller für eine Druckfeder 33 dient, anderseits durch diese Druckfeder 33 im ständigen Kontakt mit einem Exzenter 34 gehalten wird. Der Exzenter 34 ist seinerseits drehbar mit der Achse des Gelenkes 30 (Fig. 4) verbunden und in Form und Lage so abgestimmt, dass er den Anschlag 25 entgegen der Rückstellkraft der Druckfeder 33 erst dann verschiebt, nachdem die Presshülse 3 auf das Kunststoffrohr 1 aufgeschoben wurde.

Die Fig. 4 bis 6 veranschaulichen drei Phasen des Montagevorganges. Gemäss Fig. 4 ist die Spannzange 13 geöffnet, die Mitnehmerhülse 3 ist mit der Ueberwurfmutter 4 auf den Zentrierdorn 25 aufgeschoben und das Kunststoffrohr 1 liegt mit seiner Mündung auf der konischen Zentrierspitze 25a auf. In dieser Lage des Rohres wird nun der Spannzangenschenkel 15 mittels des Kniehebelverschlusses 16 gegen das Rohr 1 gepresst und verriegelt.

Nun wird der Betätigungshebel 31 im Gegenuhrzeigersinn um die Achse 30 geschwenkt, bis dieser die in Fig. 9 dargestellte Lage erreicht hat, in welcher er praktisch koaxial zum Halter 12 liegt. Bei dieser Schwenkbewegung des Betätigungshebels 31 wird, wie bereits erwähnt, der Pressring 26 auf dem Anschlag 25 vorgeschoben und schiebt dabei die Mitnehmerhülse 3 mit Ueberwurfmutter 4 vor sich her, bis die Mitnehmberhülse 3 die gewünschte Lage auf dem Rohr 1 erreicht hat. Diese Endstellung des Pressrings 26 ist in Fig. 9 dargestellt.

Zu bemerken ist hier einerseits, dass das Aufschieben der Mitnehmerhülse 3 auf das Rohr 1 durch eine leicht konische Anfasung der Presshülsenmündung erleichtert wird, welche in Fig. 4 mit A bezeichnet ist. Andererseits wurde der Exzenter 34 durch den Betätigungshebel 31 zwar mitgedreht, konnte aber bisher dank seiner Lage und Formgebung noch keine Axialverschiebung des Anschlages 25 bewirken.

Bewegt man nun den Hebel 31, wie Fig. 10 zeigt, über seine Koaxiallage nach Fig. 5 hinaus, so schiebt der Exzenter 34 den Anschlag 25 um ein geringes Mass nach vorn in das Kunststoffrohr 1 hinein und bewirkt dadurch die gewünschte Voraufweitung der Rohrmündung.

In der letzten Bewegungsphase des Betätigungshebels 31, die Fig. 6 zeigt, trifft ferner der Arm 29 auf einen am Kniehebelverschluss 16 angeordneten Auslösestift 35, wodurch der Kniehebelverschluss gelöst wird und das Kunststoffrohr 1 aus der Spannzange 13 herausfällt.

Gemäss den beschriebenen Ausführungsbeispielen ist die Mitnehmerhülse 3 auf ihrer Innenseite mit nach innen vorstehenden, ringförmigen Widerhaken 3a versehen, welche die Aufgabe haben, die Mitnehmerhülse 3 am Kunststoffrohr 1 sicher zu verankern. Dabei soll die Mitnehmerhülse 3 unter der Einwirkung einer in Axialwirkung eingreifenden Zugkraft das Kunststoffrohr 1 mitnehmen und andererseits auf dem Kunststoffrohr möglichst gegen Verdrehung gesichert sein.

Es dürfte dem Fachmann klar sein, dass die Verankerung der Mitnehmerhülse auf dem Kunststoffrohr in der verschiedensten Weise gelöst werden kann. So wäre es unter anderem beispielsweise möglich, die ringförmigen Widerhaken 3a in Gewindeform auszubilden, und zwar vorzugsweise in Form eines in Figur 7 dargestellten Spitzgewindes. Das Profil dieses in seiner Gesamtheit mit 36 bezeichneten Gewindes weist eine zur Hülsenachse A praktisch rechtwinklige Flanke F1 auf, sowie eine zur Achse A geneigte Flanke F2. Der Neigungswinkel $\alpha$ der Flanke F2 gegenüber der Achse A kann beispielsweise zwischen 30 und 70° liegen; ein bevorzugter Winkelbereich liegt zwischen 50 und 60°.

Das Gewinde 36 wird, wie Figur 7 zeigt, als scharfgängiges Spitzgewinde ausgebildet. Um die angestrebte Verdrehsicherung zu erreichen, sollte die Gangrichtung des Gewindes 36 derjenigen der Ueberwurfmutter 4 entgegengesetzt sein. Ist das Gewinde der Ueberwurfmutter 4 somit rechtsgängig, so wird das Gewinde 36 der Mitnehmerhülse 3 linksgängig gewählt.

Diese in Figur 7 dargestellte Ausführungsform der Mitnehmerhülse 3 dürfte sich z.B. für grosse Nennweiten besonders eignen. Dabei dürfte es in vielen Fällen möglich sein, die Hülse mit einem einfachen, zangenartigen Hilfswerkzeug - oder gar von Hand - auf den Endabschnitt des Kunststoffrohres aufzuschrauben, auf welchem sie dann sicher sowohl in Axialrichtung als auch gegen Verdrehung verankert ist.

Eine weitere Art der Befestigung der Mitnehmerhülse 3 auf dem Kunststoffrohr 1 könnte ferner darin bestehen, dass an der Innenseite der Mitnehmerhülse 3 nach innnen vorstehende federnde Widerhaken angeordnet wären. Die Hülse liesse sich dann von Hand auf den Endabschnitt des Kunststoffrohres aufschieben und wäre durch die federnden Widerhaken gesichert.

Der Querschnitt der Mitnehmerhülse 3 kann im Bereich der freien Stirnfläche derselben auch nach innen verlaufend abgeschrägt sein, so dass das Kunststoffrohr zwar aus der Hülsenbohrung heraus-, nicht aber über den Hülsenumfang hinausragt.

Schon durch die blosse Beschreibung der Funktion der erfindungsgemässen Vorrichtung dürfte klar geworden sein, was durch zahlreiche praktische, unter verschiedensten Bedingungen durchgeführte Versuche bestätigt wurde: Dank der erfindungsgemässen Vorrichtung lässt sich die Rohrverbindung innerhalb kürzester Zeit ohne vorherige Rohranwärmung auf unkomplizierte Weise realisieren.

## Ansprüche

1. Rohrverbindung für ein Kalt- und insbesondere Warmwasser führendes Rohrleitungssystem, umfassend den Endabschnitt einer Kunststoffrohrleitung (1) und ein flüssigkeitsdicht mit derselben gekuppeltes, aus Metall oder Kunststoff gefertigtes Anschlussstück (2), mit einer auf den unbearbeiteten Aussenumfang des Leitungs-Endabschnitts aufgebrachten geschlossenen Metallhülse (3), von deren Innenumfang Verankerungsorgane (3a) zum Angreifen am Endabschnitt-Aussenumfang abstehen und welche an ihrem Aussenbereich ein aus einem Mitnehmer (3b) und einer Ueberwurfmutter (4, 4b) bestehendes Kupplungsmittel zur Verbindung mit dem Anschlussstück aufweist, wobei das über die Stirnseite der Metallhülse (3) um einen vorbestimmten Abstand (x) hinausragende Leitungsende zu einem aufgeweiteten Endabschnitt (1a) geformt ist, welcher zwischen eine gewölbte oder konische Anpressfläche (10) des Anschlussstückes (2) und die diesem zugewandte Stirnfläche der Metallhülse (3) hineinragt und in dieser Lage durch den von der Ueberwurfmutter (4) ausgeübten Anpressdruck flüssigkeitsdicht angekuppelt ist, dadurch gekennzeichnet, dass der Innenumfang der Hülse (3) einen Innendurchmesser besitzt, der kleiner ist als der Aussendurchmesser des Leitungs-Endabschnitts (1a), derart, dass ein presssitzartiges Angreifen des mit den Verankerungsorganen (3a) versehenen Innenumfangs der Hülse (3) erzeugt wird, und dass ferner zwischen dem Mitnehmer (3b) der Hülse (3) und der Ringschulter (4b) der Ueberwurfmutter (4) ein elastisches Ausgleichsglied (6) angeordnet ist, das mittels seiner form- und/oder materialelastischen Rückstellkraft die durch Erwärmung durch fliessendes Warmwasser bzw. Abkühlung bei Zapfstillstand bedingten Materialdehnungen bzw. -Schrumpfungen ausgleicht.

2. Rohrverbindung nach Anspruch 1, dadurch gekennzeichnet, dass das elastische Ausgleichsglied (6) eine Tellerfeder ist.

3. Rohrverbindung nach Anspruch 1 oder 2, dadurch gekennzeichnet, dass die Verankerungsorgane (3a) am Innenumfang der Hülse als eine Anzahl nach innen gerichteter, ringartig abstehender widerhakenförmiger Zähne ausgebildet sind.

4. Rohrverbindung nach einem der Ansprüche 1 bis 3, dadurch gekennzeichnet, dass zwischen dem Mitnehmer (3b) der Hülse (3) und der Ringschulter (4b) der Ueberwurfmutter (4) ein das Mitdrehen der Hülse (3) und der Kunststoffrohrleitung (1) bei der Montage verhinderndes reibungsminderndes Element (5) angeordnet ist.

5. Vorrichtung zur Montage der Rohrverbindung gemäss einem der Ansprüche 1 bis 4, wobei die Metallhülse (3) mit aufgesetzter Ueberwurfmutter (4) auf einen Endabschnitt der Kunststoff-Rohrleitung (1) aufzupressen ist, gekennzeichnet durch

   - eine Spannzange (13), die an zwei Zangenschenkeln (14, 15) zusammenwirkende Spannbacken (23, 24) trägt, um zwischen diesen Backen den Leitungs-Endabschnitt für das Aufbringen der Metallhülse (3) axial unverschiebbar zu fixieren,
   - einen konzentrisch zur Längsmittelachse des Leitungsendabschnitts in der Spannzange (13) vorgesehenen, als Zentrierdorn ausgebildeten Anschlag (25) mit einem dem Innendurchmesser der Metallhülse (3) entsprechenden Aussendurchmesser, auf dessen Umfangsfläche die Metallhülse (3) zusammen mit einer Ueberwurfmutter (4) gleitfähig aufsetzbar ist,
   - einen auf dem Anschlag (25) gleitend verschiebbaren Pressring (26) sowie mit dem Pressring (26) gekoppelte Antriebsorgane (27-31), die bei ihrer Betätigung die Metallhülse (3) auf den fixierten Leitungsendabschnitt aufschieben.

6. Vorrichtung nach Anspruch 5, dadurch **gekennzeichnet,** daß die Spannzangen (13) und der Anschlag (25) an einer gemeinsamen Halterung (12) vorgesehen sind, daß die zangenschenkel an der Halterung ortsfest (14) und schwenkbar (15) angeordnet sind und daß der schwenkbare zangenschenkel (15) mit einem ebenfalls an der Halterung angelenkten Kniehebelverschluß (16) gekoppelt ist.

7. Vorrichtung nach Anspruch 5 oder 6, dadurch **gekennzeichnet,** daß der auf der Umfangsfläche des als Zentrierdorn ausgebildeten Anschlags (25) gleitend geführte Preßring (26) über eine Schubkurbel (27-29) mit einem schwenkbar gelagerten Bedienungshebel (31) verbunden ist, der bei Betätigung den Preßring auf dem Anschlag (25) verlagert, wobei die Schubkurbel (27-29) entsprechend bemessen ist, daß sie in ihrer Strecklage die Metallhülse (3) mit einem Überstand (Abstand x) auf den Leitungs-Endabschnitt aufschiebt.

8. Vorrichtung nach Anspruch 7, dadurch **gekennzeichnet,** daß der Kniehebelverschluß (16) der Spannzange (13) einen Mitnehmeranschlag (35) aufweist, der in der Bewegungsbahn der Schubkurbel (27-29) liegt, derart, daß die Schubkurbel nach Überschreiten ihrer Strecklage auf den Mitnehmeranschlag (35) auftrifft.

9. Vorrichtung nach Anspruch 7 oder 8 dadurch **gekennzeichnet,** daß die Schwenkachse (30) des Betätigungshebels (31) mit einem Exzenter (34) gekoppelt ist, auf dessen Außenfläche die innere Stirnfläche des genannten Anschlags (25) unter Federkraft (33) aufliegt, derart, daß der genannte Exzenter (34) nach dem Aufpressen der Hülse (3) auf das Kunststoffrohr (1) den Anschlag (25) um ein vorbestimmtes Maß in die überstehende Kunststoffrohrmündung hineinschiebt und damit eine Voraufweitung derselben bewirkt.

## Claims

1. A junction device for a tubing system conducting cold water and especially warm water, comprising the end section of a plastic tubing (1) and a connection piece (2) coupled to the tubing in a fluid-tight manner and produced from metal or plastic, having a closed metal sleeve (3) attached to the unfinished outer circumference of the tubing end section, from the inner circumference of which sleeve (3) anchoring members (3a) protrude to engage with the outer circumference of the end section and which has on its outer region a coupling means composed of a catch (3b) and a union nut (4, 4b) for joining to the connection piece, the tubing end projecting beyond the end face of the metal sleeve (3) by a predetermined distance (x) being shaped to an expanded end section (1a), which projects inwards between a curved or conical contact surface (10) of the connection piece (2) and the end face of the metal sleeve (3) facing said connection piece (2) and is coupled in this position in a fluid-tight manner by the contact pressure exerted by the union nut (4), characterised in that the inner circumference of the sleeve (3) has an internal diameter which is smaller than the external diameter of the tubing end section (1a) in such a way that a force-fit-type engagement of the inner circumference of the sleeve (3) provided with the anchoring members (3a) is produced, and in that furthermore between the catch (3b) of the sleeve (3) and the ring shoulder (4b) of the union nut (4) there is arranged a resilient compensating member (6) which compensates for material expansions or shrinkages caused by heating through flowing warm water or cooling when the tap is not in use by means of its restoring force resulting from elasticity of shape and/or material.

2. A junction device for a tube according to claim 1, characterised in that the resilient compensating member (6) is a cup spring.

3. A junction device for a tube according to claim 1 or 2, characterised in that the anchoring members (3a) on the inner circumference of the sleeve are constructed as a number of teeth facing inwards, protruding in the manner of a ring and shaped like barbs.

4. A junction device for a tube according to one of claims 1 to 3, characterised in that a friction-reducing element (5) which prevents the sleeve (3) and the plastic tubing (1) from turning at the same time during installation is arranged between the catch (3b) of the sleeve (3) and the ring shoulder (4b) of the union nut (4).

5. An apparatus for installation of the junction device for a tube according to one of claims 1 to 4, in which the metal sleeve (3) with the union nut (4) in place is to be pressed onto an end section of the plastic tubing (1), characterised by
   - a collet (13) which bears interacting clamping jaws (23, 24) on two collet arms (14, 15), in order to fix the tubing end section between these jaws in an axially nondisplaceable way for the attachment of the metal sleeve (3),
   - a stop (25) provided in the collet (13) concentrically with respect to the longitudinal central axis of the tubing end section and constructed as a centering mandrel, having an external diameter corresponding to the internal diameter of the metal sleeve (3), on the circumferential surface of which the metal sleeve (3) can be placed together with a union nut (4) so as to be able to slide,
   - a pressure ring (26) which can be displaced in a sliding manner on the stop (25) as well as drive members (27-31) which are coupled to the pressure ring (26) and, when activated, push the metal sleeve (3) onto the fixed tubing end section.

6. An apparatus as claimed in claim 5, characterised in that the collets (13) and the stop (25) are provided on a common holder (12), in that the collet arms are arranged so as to be fixed (14) and pivotable (15) on the holder and in that the pivotable collet arm (15) is coupled with a toggle-lever closure (16) similar articulated on the holder.

7. An apparatus as claimed in claim 5 or 6, characterised in that the pressure ring (26) which is guided in a sliding manner on the circumferential surface of the stop (25) constructed as a centering mandrel is joined via a crank mechanism (27-29) to a pivotably mounted operating lever (31) which, when activated, moves the pressure ring on the stop (25), the crank mechanism (27-29) being of corresponding dimensions that in its extended position it pushes the metal sleeve (3) with a projecting length (distance x) onto the tubing end section.

8. An apparatus according to claim 7, characterised in that the toggle-lever closure (16) of the collet (13) has a catch stop (35) which is located in the path of movement of the crank mechanism (27-29) in such a manner that the crank mechanism strikes the catch stop (35) once it has exceeded its extended position.

9. An apparatus according to claim 7 or 8, characterised in that the pivoting axis (30) of the activating lover (33) is coupled to an eccentric (34), on the outer surface of which the inner end face of said stop (25) bears under spring force (33) in such a manner that the said eccentric (34), after the pressing of the sleeve (3) onto the plastic tube (1), moves the stop (25) in by a predetermined amount into the projecting plastic tube opening and thus effects a preliminary expansion of the same.

## Revendications

1. Raccord de tuyau pour une tuyauterie d'eau froide et en particulier d'eau chaude, comprenant la section d'extrémité d'un tuyau en matière plastique (1) et une tubulure de raccordement (2), en métal ou en matière plastique, aboutée d'une manière étanche au liquide à ce tuyau, une douille métallique (3) fermée étant disposée sur la périphérie externe non usinée de la section d'extrémité du tuyau et présentant, sur sa périphérie interne, des organes d'ancrage saillants (3a) destinés à venir en prise avec la périphérie externe de la section d'extrémité et, dans sa zone externe, un moyen d'assemblage constitué d'un organe entraîneur (3b) et d'un écrou de raccordement (4, 4b) assurant la liaison à la tubulure de raccordement, l'extrémité du tuyau qui dépasse la face d'about de la douille métallique (3) d'une distance prédéterminée (x) étant façonnée en une section d'extrémité évasée (1a) qui s'étend entre une face de pression concave ou conique (10) de la tubulure de raccordement (2) et la face d'about de la douille métallique (3) qui lui fait face et qui, dans cette position, est aboutée d'une manière étanche au liquide par la pression de serrage exercée par l'écrou de raccordement (4), caractérisé en ce que la périphérie interne de la douille (3) présente un diamètre intérieur qui est inférieur au diamètre extérieur de la section d'extrémité (1a) du tuyau, ce qui assure une attaque avec ajustement serré de la périphérie interne de la douille (3) pourvue des organes d'ancrage (3a), et qu'en outre entre l'organe entraîneur (3b) de la douille (3) et l'épaulement annulaire (4b) de l'écrou de raccordement (4) est disposé un élément de compensation élastique (6) qui, grâce à la force de rappel élastique due à sa forme et/ou à sa matière, compense les dilatations ou les retraits provoqués par un échauffement par de l'eau chaude en circulation ou un refroidissement lors d'un arrêt de la distribution d'eau.

2. Raccord de tuyau suivant la revendication 1, caractérisé en ce que l'élément de compensation élastique (6) est une rondelle-ressort.

3. Raccord de tuyau suivant la revendication 1 ou 2, caractérisé en ce que les organes d'ancrage (3a) sont prévus sur la périphérie interne de la douille sous la forme d'un certain nombre de dents disposées en sapin et formant des nervures annulaires dirigées vers l'intérieur.

4. Raccord de tuyau suivant l'une quelconque des revendications 1 à 3, caractérisé en ce qu'entre l'organe entraîneur (3b) de la douille (3) et l'épaulement annulaire (4b) de l'écrou de raccordement (4) est disposé un élément (5) réduisant la friction qui empêche la douille (3) et le tuyau en matière plastique (1) d'accompagner la rotation lors du montage.

5. Dispositif pour le montage du raccord de tuyau suivant l'une quelconque des revendications 1 à 4, au cours duquel la douille métallique (3) doit être pressée, au moyen de l'écrou de raccordement (4) qui la coiffe, sur une section d'extrémité du tuyau en matière plastique (1), caractérisé par
   - une pince de serrage (13), qui, sur deux branches de pince (14, 15), porte des mâchoires de pince (23, 24) coopérantes pour fixer la section d'extrémité du tuyau entre ces mâchoires d'une manière l'empêchant de glisser axialement en vue de la mise en place de la douille métallique (3),

- une butée (25) ayant la forme d'un mandrin de centrage, prévue dans la pince de serrage (13), concentriquement à l'axe longitudinal central de la section d'extrémité du tuyau, et présentant un diamètre extérieur correspondant au diamètre intérieur de la douille métallique (3), la douille métallique (3) pouvant être mise en place par glissement, conjointement avec un écrou de raccordement (4), sur la surface périphérique de cette butée,

- une virole de refoulement (26) pouvant coulisser sur la butée (25) ainsi que des organes d'entraînement (27-31) accouplés à cette virole (26), qui, lorsqu'ils sont actionnés, font glisser la douille métallique (3) sur la section d'extrémité fixée du tuyau.

6. Dispositif suivant la revendication 5, caractérisé en ce que la pince de serrage (13) et la butée (25) sont prévues sur un support commun (12), que les branches de la pince sont montées fixe (14) et à pivotement (15) sur le support et que la branche de pince pivotante (15) est accouplée à un mécanisme de fermeture à genouillère (16) articulé également au support.

7. Dispositif suivant la revendication 5 ou 6, caractérisé en ce que la virole de refoulement (26) guidée à coulissement sur la surface périphérique de la butée (25) ayant la forme d'un mandrin de centrage est reliée, par l'intermédiaire d'un mécanisme à manivelle (27-29) à un levier de commande pivotant (31), qui, lorsqu'il est actionné, déplace la virole de refoulement sur la butée (25), le mécanisme à manivelle (27-29) étant dimensionné adéquatement de telle sorte que, dans sa position étendue, il refoule la douille métallique (3) de manière à créer un dépassement (distance x) sur la section d'extrémité du tuyau.

8. Dispositif suivant la revendication 7, caractérisé en ce que le mécanisme de fermeture à genouillère (16) de la pince de serrage (13) comporte une butée d'entraînement (35) qui est disposée dans le chemin du mécanisme à manivelle (27-29) d'une manière telle que cette manivelle, après avoir dépassé sa position étendue, parvienne sur la butée d'entraînement (35).

9. Dispositif suivant la revendication 7 ou 8, caractérisé en ce que l'axe de pivotement (30) du levier de commande (31) est accouplé à un excentrique (34) sur la surface extérieure duquel s'applique la face d'about interne de ladite butée (25) de sorte que ledit excentrique (34), lorsque la douille (3) est pressée sur le tuyau en matière plastique (1), introduit la butée (25) dans une mesure prédéterminée dans l'embouchure dépassante du tuyau en matière plastique et assure ainsi un pré-évasement de ce tuyau.

Fig.1

Fig. 2

Fig.7

Fig.3 (I-I)

*Fig. 4*

Fig. 5

1  23  3  4  13  26  27  31  12

24

X

16

EP 0 219 661 B1

**Fig. 6**

EP 0 219 661 B1